# EUROPEAN PATENT APPLICATION

(11) **EP 4 725 790 A1**
(43) Date of publication of application: **15.04.2026**
(21) Application number: 24205896.4
(22) Date of filing: 10.10.2024
(51) Int. Cl.: B61K 9/12, B61L 1/16, B61L 27/57, G01M 17/10

(54) **AN EQUIPMENT PLATFORM FOR USE WITH A RAIL TRACK FOR THE INSPECTION OF TRAINS**

(71) Applicant: DTEC GmbH, 61191 Rosbach v.d. Höhe (DE)
(72) Inventor: ZHANG, Yu, 60438 Frankfurt am Main (DE); PENG, Chaoyong, 61440 Oberursel (DE); XIE, Liming, 61348 Bad Homburg v.d. Höhe (DE); GUO, Jianguang, 61352 Bad Homburg (DE); ZHANG, Bin, 60438 Frankfurt am Main (DE)
(74) Representative: Keil & Schaafhausen Patentanwälte PartGmbB

(57) **Abstract**

The invention relates to an equipment platform (1) for use with a rail track (90) for the inspection of trains, wherein the equipment platform (1) is configured to be installed to a rail track (90) having two rails (91, 92) which extend parallel to each other and are spaced apart by a gauge (93). The equipment platform (1) comprises: a base body (2), an equipment carrier body (3), and an inspection unit (4) configured to perform inspection of trains, wherein the inspection unit (4) is connected to the equipment carrier body (3). The equipment platform is characterized in that the equipment platform (1) further comprises at least two rail connecting means (5) respectively configured to be attached to one of the rails (91, 92). The equipment carrier body (3) is connected to the base body (2) by first dampening means (6), the rail connecting means (5) are connected to the base body (2) and are spaced apart by the gauge (93), and the rail connecting means (5) comprise second dampening means (7). The first dampening means (6) and the second dampening means (7) are configured to dampen vibrations at least in the range of 5 Hz to 2 kHz.

## Description

The present invention relates to an equipment platform for use with a rail track for the inspection of trains, wherein the equipment platform is configured to be installed to a rail track having two rails which extend parallel to each other and are spaced apart by a gauge, the equipment platform comprising: a base body, an equipment carrier body, and an inspection unit configured to perform inspection of trains, wherein the inspection unit is connected to the equipment carrier body.

Trains are exposed to great demands during operation. These can result, for example, from a high mileage or high payloads during operation. On the other hand, reliability of the trains is required to ensure efficient operation. Particular attention is paid to the components of the bogies, especially the wheelsets consisting of two opposing wheels connected by a common axle. Since the wheelsets interact directly with the rail, they are subjected to high mechanical stress during operation. This results in wear of the wheel's running tread. Furthermore, internal cracks of the wheel or local damages to the running tread can occur. To become aware of a worn running tread or local damage at an early stage and thus, if necessary, to be able to replace a wheelset before complete failure, regular inspections of the wheelsets are provided for. Inspection is commonly performed using equipment platforms that are located in a maintenance section of the track below the rails to allow direct view of the wheelsets or the bogies.

For example, US 5 636 026 A discloses a system for contactless measurement of railroad wheel characteristics with two scanner enclosures that are positioned on either side of each rail of a rail track. The scanner enclosures are rigidly mounted on a shared solid steel plate that is located under a rail tie. The rail tie connects the two rails of the rail track. Optical scanners are provided in the scanner enclosures that perform measurements of the wheel characteristics of trains passing by.

Special track sections are therefore required for the inspection of trains, which are suitable for the installation of the described platforms. For example, the ground must be specially reinforced or a foundation must be provided to support a platform. In addition, the vibrations generated by passing trains are transmitted to the platform via the coupling with the ground, thereby negatively affecting the measurement results. This problem is further intensified when trains pass the platform at high speeds.

Therefore, in view of the foregoing shortcomings, it is an object of the present invention to provide an equipment platform which may be easily installed to the rail track and that enables to provide reliable inspection of trains passing even at high speeds.

This object is solved by the equipment platform according to claim 1. Preferred embodiments of the invention are evident from the dependent claims. However, it should be noted that the disclosure is not restricted to the subject-matter defined in the appended claims. Rather, the disclosure may comprise improvements in addition to or as an alternative to, the ones defined in the independent claims as will become apparent from the following description.

According to an aspect of the present disclosure, the equipment platform further comprises at least two rail connecting means respectively configured to be attached to one of the rails, wherein the equipment carrier body is connected to the base body by first dampening means, wherein the rail connecting means are connected to the base body and are spaced apart by the gauge, wherein the rail connecting means comprise second dampening means, and wherein the first dampening means and the second dampening means are configured to dampen vibrations at least in the range of 5 Hz to 2 kHz.

The base body indirectly connects the at least two rail connecting means with the equipment carrier body and the inspection unit. The platform thus formed can be attached to the rails of the rail track by means of rail connecting means. When attached to the rails of the rail track, the base body may be positioned below the rails of the rail track. At least two rail connecting means are provided for this purpose, which are spaced apart by the gauge (track width) so that one rail connecting means can engage and be fastened to one rail of the rail track and the other rail connecting means can engage and be fastened to the other rail of the rail track. A rail connecting means can, for example, be formed by a mounting clamp, a track clip, a rail clip or the like. Preferably, the rail connecting means contact a side surface of the rail and/or the foot of the rail. By providing a least two rail connecting means, the equipment platform can be directly connected to the rails of a rail track without the need of a support structure such as a concrete foundation or the like below the rail track. Further, the equipment platform may be connected at any position of the rail track by removing the gravel tracked partly and connecting the rail connecting means to the respective rail.

By providing first dampening means between the equipment carrier body and the base body, the transmission of vibrations from the equipment carrier body to the base body and vice versa is attenuated. In the same way, by providing second dampening means in each rail connecting means, the transmission of vibrations from a rail connecting means to the base body and vice versa is attenuated. Therefore, by providing first dampening means and second dampening means, the transmission of vibrations from the rail connecting means to the equipment carrier body and vice versa is attenuated. The first dampening means and the second dampening means are configured to dampen vibrations at least in the range of 5 Hz to 2 kHz. Preferably the first dampening means and the second dampening means are configured to dampen the vibrations that occur in the environment of a rail track as defined by DIN EN 50125. In one embodiment, the first dampening means and the second dampening means are configured to dampen vibrations at least in the range of 5 Hz to 2 kHz by 10 dB, preferably by 20 dB, more preferably by 30 dB. The first dampening means and/or the second dampening means may be provided by any suitable form of shock absorber and/or damper and/or damping material, which do comprise, but are not limited to viscoelastic dampers, friction dampers, fluid dampers, magnetorheological dampers, electrorheological dampers, elastic bushings, elastic mounts, constrained layer dampers or the like. The first dampening means and/or the second dampening means may also be provided by any combination of the stated dampers. In a preferred embodiment, the first dampening means may be provided by an elastic bushing, for example a rubber bushing, and/or an elastic spring, for example a rubber spring. In a preferred embodiment, the second dampening means may be provided by an elastic film, for example a rubber mat. Preferably, the second dampening may be provided as a layer of dampening material provided at a contact surface of the rail connecting means, wherein the contact surface may be in direct contact with a rail when the rail connecting means may be attached to a rail. The provision of dampening means in the rail connecting means (second dampening means) on the one hand and the equipment carrier body and the base body (first dampening means) on the other hand, results in a twofold vibration decoupling of the equipment carrier body from the rails. Thus, inspections can be carried out with the equipment platform despite a direct connection to the rails, as the measurements of the inspection unit are significantly less disturbed by the vibrations caused by passing trains. Furthermore, inspections can also be carried out when trains pass the track section at high speed, as even strong vibrations are sufficiently damped by the twofold vibration decoupling.

According to another aspect of the invention, the base body may comprise at least one first tubular member. The first tubular member may comprise a cylindrical shape or a cuboid shape, preferably with a rectangular-, a polygonal-, a quadratic-, a circular- or a quadratic cross-section. It may also be possible that the first tubular member may comprise one form of cross-section in one section and another form of cross section in another section or even may comprise multiple different sections. The first tubular member may also be formed by a shape that may be open at one side or in one section, for example a U-shape, a semicircle-shape, an L-shape or the like. The first tubular member may be formed by metal, plastic, a composite material or the like. Preferably, the first tubular member at least partly comprises aluminum or steel. Tubular members are available in a wide range of sizes and materials, making them easy and inexpensive to procure. Furthermore, they are easy to process and, for example, can be easily joined together, which reduces the manufacturing effort and thus also manufacturing cost.

Preferably, the first tubular member may at least be in sections partially hollow. An interior space or cavity may be formed in a part of the first tubular member. It may also be that there may be a plurality of interior spaces or cavities in the first tubular member. Such an interior space inside the first tubular member may be closed off from the outside of the first tubular member. It may also be that such a space is open to the outside at one or more locations. A tubular member that is open to the outside at two points may, for example, be formed by a tube or a pipe that has a hollow cylindrical-, rectangular- or polygonal shape, which is open at both ends. Such a tubular member may also be formed by a hollow or at least partially hollow extruded profile. The provision of a hollow section may lower the weight of a tubular member making it easier to transport the equipment platform, to handle the equipment platform during use and to securely connect the equipment platform to the rails of the rail track. Alternatively, or in combination, it may also be possible to fill a hollow section of a first tubular member with a foam or foam-like structure that contains gas inclusions. Said provision of a foam or a foam-like structure may reinforce a hollow section of the first tubular member and at the same time may be lighter than providing the first tubular member from solid material.

In one embodiment the equipment carrier body may comprise at least one engagement portion configured to engage with the first dampening means, and that the first tubular member may comprise at least one first opening in a section of the first tubular member that may be at least partially hollow forming a cavity in the first tubular member, wherein the first dampening means may be disposed in the cavity of the first tubular member, and wherein the engagement portion may pass through the first opening and may engage with the first dampening means in the cavity. An engagement portion may be a section of the equipment carrier body that is suitable for receiving the load of the equipment carrier body. This may, for example, be a surface section of the equipment carrier body or a protruding part of the equipment carrier body, which, for example, is integrally formed with the equipment carrier body or attached to a part of the equipment carrier body. The engagement portion may enter the cavity through a first opening that may, for example, be formed by a hole or a slit in the first tubular member. The cavity may only comprise one first opening to the exterior of the first tubular member. Alternatively or in addition, the cavity may comprise additional openings to the exterior of the first tubular member, for example, a cavity may be formed by the interior of a hollow tube or a hollow profile open at one or both ends and comprising at least one first opening on a circumferential surface of the tube or the profile. The first dampening means may be disposed in the cavity, wherein the first dampening means may be connected to any surface on the interior of the cavity. It may also be possible that the first dampening means may be disposed in the cavity but connected to the first tubular member on an outside (an exterior surface) of the first tubular member. Preferably, the first dampening means may be connected to an interior surface of the first tubular member and the engagement portion that may be formed integrally with the equipment carrier body may enter the cavity through a slit or a hole and may be connected to the first dampening means in the cavity. Providing the first dampening means in a cavity in the first tubular member shields the first dampening means from environmental influences such as water, dust, and debris and thus protects the first dampening means. Furthermore, the connections between the first tubular member and the first dampening means, and the engagement portion and the first dampening means, respectively, are protected as well. Still further, by providing the first dampening means on the inside of the first tubular member, a more compact equipment platform may be provided.

Preferably the equipment carrier body may comprise at least one through hole, wherein the rail connecting means may extend through the at least one through hole. The through hole may be formed by a hole from one side or surface to another side or surface of the equipment carrier body. The through hole may comprise a circular shape, a slot shape, a rectangular shape, a polygonal shape or the like. The rail connecting means may be connected to the base body at one end and may pass through the through hole of the equipment carrier body. Preferably, the rail connecting means may not contact the through hole and/or the equipment carrier body. In one embodiment, in an orientation when the equipment platform is positioned on the ground, the base body may be positioned on the bottom and the equipment carrier body may be positioned on top of the base body. One section of the rail connecting means may be positioned on top of the equipment carrier body, wherein another section of the rail connecting means may pass through the through hole and may be connected at a top surface of the base body. This design may enable a compact construction of the equipment platform, as the rail connecting means may be attached in a space-saving manner. Furthermore, the rail connecting means may be at least partly protected from environmental influences by the through hole.

In one embodiment, the equipment carrier body may comprise a second tubular member and a third tubular member that may be arranged side by side, wherein the second tubular member and the third tubular member may be connected by at least one of a linking member. The second tubular member and the third tubular member may be a tubular member from the type of the first tubular member described above. In one embodiment, a plurality of second tubular members and/or third tubular members may be provided. The second tubular member and the third tubular member may be arranged essentially parallel to each other. Preferably, the second tubular member and the third tubular member are spaced apart between 0.4 m to 0.6 m or 0.95 m to 1.25 m. The linking member may be connected to the second tubular member at one end and may be connected to the third tubular member at another end. A linking member may be formed by, but is not limited to, a profile-shaped structure, a plate-shaped structure, a tube-shaped structure or the like. In one embodiment, a linking member may be provided as a rectangular frame. Preferably, at least two linking members may be provided, wherein the linking members each may comprise different shapes. The weight of the equipment platform may be reduced by constructing the equipment carrier body from several tubular members. Furthermore, a high degree of stability of the equipment carrier body may be achieved since the equipment carrier body may be reinforced by at least one linking member. This stability may even be increased by providing several linking members.

According to another aspect of the present invention, the base body may comprise two first tubular members, wherein one of the first tubular members may be connected by first dampening means to the second tubular member, and wherein the other one of the first tubular members may be connected by first dampening means to the third tubular member. The second tubular member may be connected by at least one first dampening means to one of the first tubular members. The third tubular member may be connected by at least one first dampening means to the other of the first tubular members. It may also be possible that the second tubular member and/or the third tubular member may be connected by a plurality of first dampening means to the respective first tubular member. Preferably, the two first tubular members may be provided side by side, for example, may be provided essentially parallel to each other. In one embodiment, the two first tubular members may be provided in an orientation and with a spacing that may correspond to the orientation and the spacing of the second tubular member and the third tubular member. The assignment of a first tubular member to a second tubular member and a first tubular member to a third tubular member may achieve a good load distribution from the equipment carrier body to the base body.

In one embodiment, two rail connecting means may be connected to each first tubular member. Preferably, a first pair of two rail connecting means may be connected to one first tubular member, wherein the first pair of rail connecting means may be spaced by the gauge, and a second pair of two rail connecting means may be connected to the other first tubular member, wherein the second pair of rail connecting means may be spaced by the gauge, and wherein the first pair of rail connecting means and the second pair of rail connecting means may be spaced by the distance of the one first tubular member and the other first tubular member. By providing two rail connecting means per first tubular member, the base body may be securely attached to the rails of the rail track. Furthermore, the stable anchoring of the base body may prevent additional vibrations the result, e.g., from tilting movements of the platform.

In one embodiment, the first tubular member, the second tubular member, and/or the third tubular member may be extruded profiles. Providing the first tubular member, the second tubular member and/or the third tubular member as an extruded profile, may offer a cost-effective way to provide said tubular members. Furthermore, extrusion may enhance the mechanical properties of the chosen material, hence providing additional strength and durability.

Preferably, the rail connecting means each may comprise an isolation means, wherein the isolation means may be configured to provide electrical insulation. The isolation means may be provided at a contact surface of the rail connecting means that contacts a rail, when the rail connecting means is attached to a rail. In one embodiment, the isolation means may be provided entirely from or comprise a layer of a material that is an electrical insulator, for example, rubber, glass, ceramic, plastic, or the like. Preferably, the isolation means may be provided as a rubber mat that may provide electrical insulation. The provision of an isolation means may provide electrical insulation from the rail track, so that the equipment platform and electronics thereon may be shielded from high currents and/or high voltages present at the rails of the rail track.

According to another aspect of the present invention, the inspection unit may comprise at least one first subunit that may be disposed at a position between the rail connecting means to perform inspection of trains from a position between the wheels of a train. Preferably, the inspection unit may comprise at least one second subunit that may be disposed at a position that may not be located between the rail connecting means to perform inspection of trains from a position beside the wheels and the axles of a train. For example, the inspection unit may comprise one first subunit that may be located between the two rails, and two second subunits that are located on either side of the rail track, when the equipment platform may be connected to the rails of the rail track. It may also be possible to dispose only one second subunit on a side of the rail track. Equipping the inspection unit with a first subunit may facilitate the inspection of the underside of passing trains, their bogies and/or their wheels from a position between the two rails of the rail track. Likewise, by equipping the inspection unit with at least one second subunit, a different angle of view of the train or its parts may be obtained from a position outside the two rails. By combining first and second subunits, a passing train may be inspected in more detail. Furthermore, by providing several first and second subunits, the quality of the inspection may be further increased, as more measurement data and/or images of the train or its parts may be obtained.

In one embodiment, the inspection unit may comprise at least two first subunits and/or second subunits that may be spaced apart in a direction perpendicular to a gauge direction defined by a line connecting one of the rail connecting means configured to be connected to one rail and one of the rail connecting means configured to be connected to the other rail, wherein the rail connecting means may be spaced apart by the gauge. Preferably, the inspection unit may comprise one second subunit that may be disposed on one side of the rail track when the equipment platform is connected to the rails of the rail track, one first subunit that may be disposed between the rails of the rail track when the equipment platform is connected to the rails of the rail track, and one second subunit that may be disposed on the other side of the rail track when the equipment platform is connected to the rails of the rail track, wherein the second subunits and the first subunit may be disposed essentially along a line that is perpendicular to a direction of propagation of the rails of the rail track when the equipment platform is connected to the rails of the rail track. In one embodiment, one first subunit and one second subunit may be provided on either side of each of the rails when the equipment platform is connected to the rails of the rail track.

According to another aspect of the present invention, the inspection unit may comprise a light source and a camera. By providing a camera in the inspection unit, images of passing trains may be taken and the condition of the trains may be inspected. For example, the camera and/or the light source may operate in the visible range of the electromagnetic spectrum. In addition or as an alternative, the camera and/or the light source may be configured to operate in other ranges of the electromagnetic spectrum, for example, infrared, microwave, ultraviolet, or the like. Preferably, the light source may be laser light source, wherein the inspection unit may be configured to inspect the condition of the wheel of the train. For example, the laser light source may be a pulsed laser or a continuous wave laser. By providing a laser light source, the amount of light available, i.e. photons per time interval, may be dramatically increased, leading to the possibility of faster image acquisition and/or shorter acquisition times. Therefore, it may be possible to inspect the wheels of a passing train that travels at elevated speeds, for example, between 80 and 120 km/h.

The above and other objects, features and advantages of the present invention will become more apparent from the following description when taken in conjunction with the accompanying drawings, in which preferred embodiments of the present invention are shown by way of an illustrative example. In this context, all the features described and/or illustrated constitute, individually or in any combination, the subject-matter of the invention, irrespective of their summary in the claims or their references.
- Figure 1: shows a perspective view of an embodiment of an equipment platform according to the present invention attached to rails of a rail track;
- Figure 2: shows a perspective view of the equipment platform shown in Fig. 1, wherein the inspection unit is omitted;
- Figure 3: shows a bottom view of the structure shown in Fig. 2 indicating the axis A-A'; and
- Figure 4: shows a side view of the structure shown in Fig. 2 cut along the axis A-A'.

In the figures, identical elements, identically acting elements, or elements of the same kind may be provided with the same reference numerals.

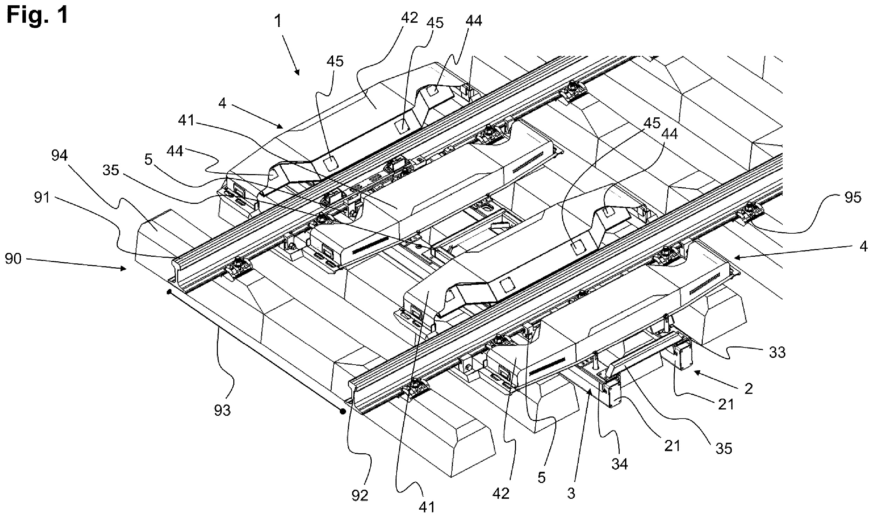

Fig. 1 shows a perspective view of an embodiment of an equipment platform 1 according to the present invention attached to rails 91, 92 of a rail track 90.

The rail track 90 comprises a first rail 91 (left rail) and a second rail 92 (right rail) that extend essentially parallel to each other in a direction of the rail track 90. The rails 91, 92 are spaced apart by the gauge 93 of the track. The rails 91, 92 are disposed on tie rods 94 that are positioned below the rails 91, 92 and are each directed perpendicular to the direction of the rail track 90. The rails 91, 92 are fixed to the tie roads 94 by rail clamps 95.

The equipment platform 1, which will be described in detail below, is connected to the two rails 91, 92 of the rail track 90. The equipment platform 1 comprises a base body 2 that is formed by two first tubular members 21 that extend perpendicular to the direction of the rail track 90 below the rails 91, 92 on either side of a tie rod 94. The first tubular members 21 are formed by hollow rectangular aluminum profiles.

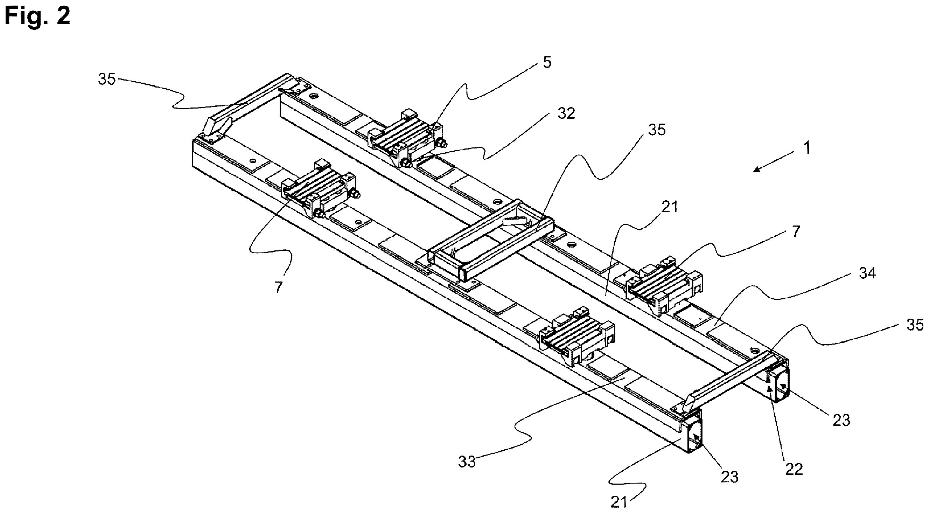

On top of the base body 2, the equipment carrier body 3 is provided. The equipment carrier body 3 is formed by one second tubular member 33 that is disposed above one of the first tubular members 21 of the base body 2, and by one third tubular member 34 that is disposed above the other one of the first tubular members 21 of the base body 2. The second tubular member 33 and the third tubular member 34 are formed by U-shaped aluminum profiles. The second tubular member 33 and the third tubular member 34 are connected to each other by three linking members 35, two of which are visible in Fig. 1 (cf. also Figs. 2-4). A first linking member 35 is connected at one end to the second tubular member 33 and at another end to the third tubular member 34 at a position that is on the right side of the rail track 90. The first linking member 35 is formed by a rectangular hollow profile that is riveted to the second tubular member 33 and the third tubular member 34, respectively. A second linking member 35 is connects the second tubular member 33 and the third tubular member 34 at a position between the two rails 91, 92 of the rail track 90. The second linking member 35 is formed as a rectangular frame of rectangular hollow profiles. A third linking member 35 that is similar to the first linking member 35 is disposed on a left side of the rail track 90.

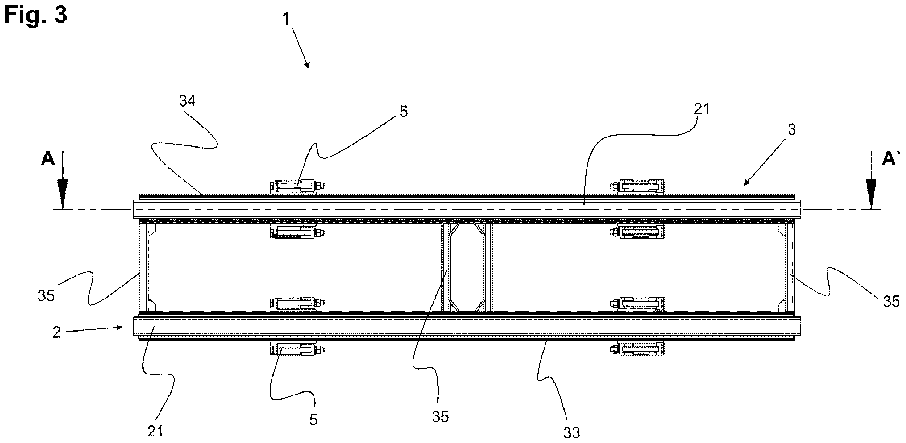

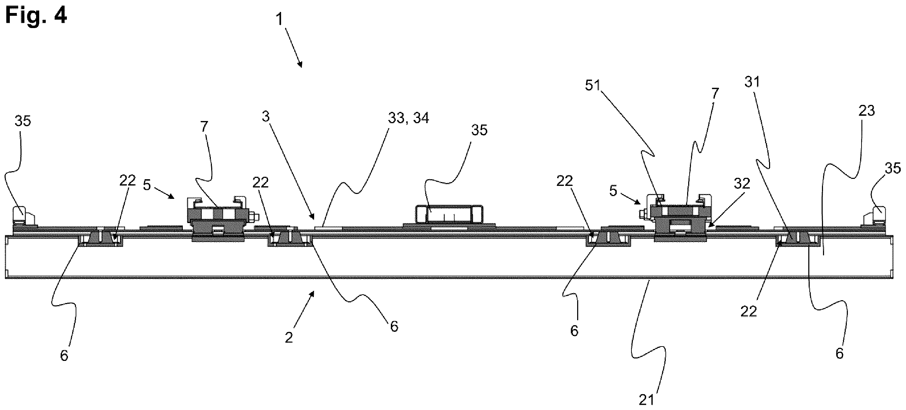

The connection of the base body 2 with the equipment carrier body 3 and the rail connecting means 5 will be described with reference to Fig. 2 and Fig. 4. Fig. 2 shows a perspective view of the base body 2, the rail connecting means 5 and the equipment carrier body 3 (the inspection unit 4 is omitted for visibility of the underlying structures) of the equipment platform shown in Fig. 1. On the other hand, Fig. 4 shows a side view of the structure shown in Fig. 2 that is cut along the axis A-A', which is indicated as a broken line in Fig. 3. The first tubular members 21 are provided as rectangular hollow profiles that comprise first openings 22 in the form of slits on either side surfaces of the profile. The U-shaped second tubular member 33 and third tubular member 34 partially cover a left side surface and a right side surface of the respective first tubular member 21, and entirely cover the upper side surface of the respective first tubular member 21.

On the shanks of the U-shaped second tubular member 33 and third tubular member 34, engagement portions 31 are formed which project through the first openings 22, which are formed as slots, into the interior of the respective first tubular member 21. Each engagement portion 31 thus extends from an outer side of the first tubular member 21 through a respective first opening 22 into the cavity 23. In the embodiment shown, the cavity 23 is formed by the hollow interior of the respective first tubular member 21. In the proximity of each respective first opening 22, a first dampening means 6 is connected to an upper surface of the interior of the first tubular member 21. The first dampening means 6 is formed by a rubber spring attached at two points to the top of the interior of the first tubular member 21. Between these two points, the rubber spring forms a U-shaped flap that is spaced from the top of the interior of the first tubular member 21 towards the bottom of the interior of the first tubular member 21. The center part of the U-shaped flap has a side facing the top of the interior of the first tubular member 21 and a side facing the bottom of the interior of the first tubular member 21. The respective engagement portion 31 is connected to the side of the U-shaped flap that faces the top of the interior of the first tubular member 21.

On a top surface of the second tubular member 33 and the third tubular member 34, circular through holes 32 are provided that extend entirely through the material of the respective profile, so that a hole is formed. Rail connecting means 7 are connected at a top surface of the exterior of each of the first tubular members 21 and extend through the respective through holes 32. Each of the first tubular members 21 is provided with two rail connecting means 5. The rail connecting means 5 each reach through a respective through hole 32 and do not contact a surface of the through hole 32 or any other part of the equipment carrier body 3.

The rail connecting means 5 are provided as rail clips. The rail clips are designed as essentially U-shaped holders with a contact surface and latching tabs arranged on both sides. One pair of latching tabs is fixed, while the other pair of latching tabs is adjustable. The adjustable pair of latching tabs can be released via a bolt connection and reattached after the fixed latching tabs have been slid onto a rail 91, 92. A stiff rubber mat is provided as second dampening means 7, covering the contact surface and the latching tabs of the rail connecting means 5, so that when the rail connecting means 5 are attached to a rail 91, 92, the rail 91, 92 only is in contact with the second dampening means 7. Between the second dampening means 7 and the contact surface of the rail connecting means 5, an isolation means 51 is provided by an insulating layer made of rubber.

Next, the equipment carrier body 3 will be described in detail. The equipment carrier body 3 comprises an inspection unit 4 that is formed by two first subunits 41 and two second subunits 42. One first subunit 41 and one second subunit 42 is provided on either side of each rail 91, 92 in the proximity of each rail 91, 92. The first subunits 41 are provided between the rails 91, 92. The second subunits 42 are not provided between the rails 91, 92 as they are disposed on the equipment carrier body 3 on either side of the rail track 90. One second subunit 42 is provided on the left side of the left rail 91 and the other one of the second subunits 42 is provided on the right side of the right rail 92. The first subunits 41 and the second subunits 42 extend along a direction parallel to the direction of the rail track 90 in a length dimension. Along the length of the second subunits 42, a laser light source 44 is disposed that is directed towards the rail 91, 92 in an angle that points approximately 45° degree upwards. The laser light source 44 emits visible light. Spaced from the light source 44 along the length of the second subunits 42, two cameras 45 are disposed that are also directed towards the rail 91, 92 in an angle that points approximately 45° degree upwards. The cameras 45 are suitable to detect visible light. Further, spaced from the cameras 45 along the length of the second subunits 42, another laser light source 44 is disposed that is configured as the laser light source 44 described above. Compared to the cameras 45, the laser light sources 44 are disposed further away from the rail 91, 92. The second subunits 42 further comprise a housing that covers the laser light sources 44 and cameras 45. Underneath the housing, the second subunits 42 comprise a controller that is configured to control the light sources 43 and cameras 45, to evaluate the acquired measurement data, to store the data on a data storage, and to transmit and receive data. The evaluation of acquired measurement data (pictures taken by the cameras) is performed by conventional algorithms and by machine learning algorithms. Each of the second subunits 42 and the first subunits 41 is formed as described above, wherein the laser light sources 44 and the cameras 45 are disposed to be directed towards the respective rail 91, 92.

By attaching the equipment platform 1 to the rails 91, 92 of a rail track 90, the configuration shown in Fig. 1 is achieved. When a train travels along the section of the rail track 90 shown in Fig. 1 and passes the equipment platform 1 with a speed of 80-130 km/h, the load of the train causes a vertical movement of the rail track and, among other things, vibrations in the range of 5 Hz to 2 kHz. The second dampening means 7 dampens the vibrations transmitted to the rail and only passes them on in a weakened form to the base body 2. The first dampening means 6 further dampens the vibrations transmitted to the base body 2, so that the equipment carrier body 3 is decoupled from the rails in a twofold manner. When the train passes, the laser light sources 44 illuminate the wheels of the train. The cameras 45 take pictures of the wheels of the train at a suitable frame rate. The second subunit 42, which is located on the left side of the left rail 91, takes pictures of the outside of one wheel tire, and the first subunit 41, which is located on the right side of the left rail 91 (and is located between the rails 91, 92), takes pictures of the inside of the wheel tire. Furthermore, the second subunit 42, which is located on the right side of the right rail 92, takes pictures of the outside of the other wheel tire connected to the same axis and the first subunit 41, which is located on the left side of the right rail 92 (and is located between the rails 91, 92), takes pictures of the inside of the other wheel tire. This procedure is consecutively performed for each wheelset of the train. The images generated are transferred to the controller. The controller analyzes the images and assesses the condition of the respective wheel. This assessment is then transferred to a server or a cloud as the inspection result.

### Reference numerals:

- 1: equipment platform
- 2: base body
- 3: equipment carrier body
- 4: inspection unit
- 5: rail connecting means
- 6: first dampening means
- 7: second dampening means
- 21: first tubular member
- 22: first opening
- 23: cavity
- 31: engagement portion
- 32: through hole
- 33: second tubular member
- 34: third tubular member
- 35: linking member
- 41: first subunit
- 42: second subunit
- 43: light source
- 44: laser light source
- 45: camera
- 51: isolation means
- 90: rail track
- 91, 92: rails
- 93: gauge
- 94: tie rod
- 95: rail clam

## Claims

1. An equipment platform (1) for use with a rail track (90) for the inspection of trains, wherein the equipment platform (1) is configured to be installed to a rail track (90) having two rails (91, 92) which extend parallel to each other and are spaced apart by a gauge (93), the equipment platform (1) comprising:
• a base body (2),
• an equipment carrier body (3), and
• an inspection unit (4) configured to perform inspection of trains,
wherein the inspection unit (4) is connected to the equipment carrier body (3),
**characterized in that** the equipment platform (1) further comprises: • at least two rail connecting means (5) respectively configured to be attached to one of the rails (91, 92),
wherein the equipment carrier body (3) is connected to the base body (2) by first dampening means (6),
wherein the rail connecting means (5) are connected to the base body (2) and are spaced apart by the gauge (93),
wherein the rail connecting means (5) comprise second dampening means (7), and
wherein the first dampening means (6) and the second dampening means (7) are configured to dampen vibrations at least in the range of 5 Hz to 2 kHz.

2. The equipment platform (1) according to claim 1, **characterized in that** the base body (2) comprises at least one first tubular member (21).

3. The equipment platform (1) according to claim 2, **characterized in that** the first tubular member (21) is at least in sections partially hollow.

4. The equipment platform (1) according to claim 3, **characterized in that** the equipment carrier body (3) comprises at least one engagement portion (31) configured to engage with the first dampening means (6), and
that the first tubular member (21) comprises at least one first opening (22) in a section of the first tubular member (21) that is at least partially hollow forming a cavity (23) in the first tubular member (21),
wherein the first dampening means (6) is disposed in the cavity (23) of the first tubular member (21), and
wherein the engagement portion (31) passes through the first opening (22) and engages with the first dampening means (6) in the cavity (23).

5. The equipment platform (1) according to any of the preceding claims, **characterized in that** the equipment carrier body (3) comprises at least one through hole (32), wherein the rail connecting means (5) extend through the at least one through hole (32).

6. The equipment platform (1) according to claims 2 to 5, **characterized in that** the equipment carrier body (3) comprises a second tubular member (33) and a third tubular member (34) that are arranged side by side, wherein the second tubular member (33) and the third tubular member (34) are connected by at least one of a linking member (35).

7. The equipment platform (1) according to claim 6, **characterized in that** the base body (2) comprises two first tubular members (21), wherein one of the first tubular members (21) is connected by first dampening means (6) to the second tubular member (33), and wherein the other one of the first tubular members (21) is connected by first dampening means (6) to the third tubular member (34).

8. The equipment platform (1) according to claims 2 to 7, **characterized in that** two rail connecting means (5) are connected to each first tubular member (21).

9. The equipment platform (1) according to claims 2 to 8, **characterized in that** the first tubular member (21), the second tubular member (33), and/or the third tubular member (34) are extruded profiles.

10. The equipment platform (1) according to any of the preceding claims, **characterized in that** the rail connecting means (5) each comprise an isolation means (51), wherein the isolation means (51) is configured to provide electrical insulation.

11. The equipment platform (1) according to any of the preceding claims, **characterized in that** the inspection unit (4) comprises at least one first subunit (41) that is disposed at a position between the rail connecting means (5) to perform inspection of trains from a position between the wheels of a train.

12. The equipment platform (1) according to any of the preceding claims, **characterized in that** the inspection unit (4) comprises at least one second subunit (42) that is disposed at a position that is not located between the rail connecting means (5) to perform inspection of trains from a position beside the wheels and the axles of a train.

13. The equipment platform (1) according to claim 11 or 12, **characterized in that** the inspection unit (4) comprises at least two first subunits (41) and/or second subunits (42) that are spaced apart in a direction perpendicular to a gauge direction defined by a line connecting one of the rail connecting means (5) configured to be connected to one rail (91) and one of the rail connecting means (5) configured to be connected to the other rail (92), wherein the rail connecting means (5) are spaced apart by the gauge (93).

14. The equipment platform (1) according to any of the preceding claims, **characterized in that** the inspection unit (4) comprises a light source (43) and a camera (45).

15. The equipment platform (1) according to claim 14, **characterized in that** the light source (43) is a laser light source (44), wherein the inspection unit (4) is configured to inspect the condition of the wheel of the train.
